# EUROPEAN PATENT SPECIFICATION

(11) **EP 0 985 181 B1**
(45) Date of publication and mention of the grant of the patent: **12.11.2003**
(21) Application number: 98922836.6
(22) Date of filing: 28.05.1998
(51) Int. Cl.: G06F 15/18

(54) **ASSOCIATIVE NEURAL NETWORK**
ASSOZIATIVES NEURONALES NETZWERK
RESEAU NEURONAL ASSOCIATIF

(30) Priority: 29.05.1997 FI 972289
(43) Date of publication of application: 15.03.2000
(73) Proprietor: Nokia Corporation, 02150 Espoo (FI)
(72) Inventor: HAIKONEN, Pentti, FIN-00370 Helsinki (FI)
(74) Representative: Virkkala, Jukka Antero
(86) International application number: FI9800450
(87) International publication number: WO98054653

(56) References cited:
- US-A- 5 150 450
- US-A- 5 299 285
- US-A- 5 394 511
- US-A- 5 467 429
- US-A- 5 491 776
- US-A- 5 535 309
- IEEE COMPUTER, Volume 29, No. 3, March 1996, ANIL K. JAIN et al., "Artificial Neural Networks: A Tutorial", pages 31-44.

## Description

### BACKGROUND OF INVENTION

The invention relates to an associative artificial neural network.

In artificial neural networks, neurons derived from the McCullogh-Pitts (1943) neuron, such as different versions of the perceptron (Frank Rosenblatt 1957), are used. Neural networks are discussed, for example, in the article "Artificial Neural Networks: A Tutorial" by Anil K. Jain, Jianchang Mao and K.M. Mohiuddin in *IEEE Computer,* March 1996, p. 31 to 44.

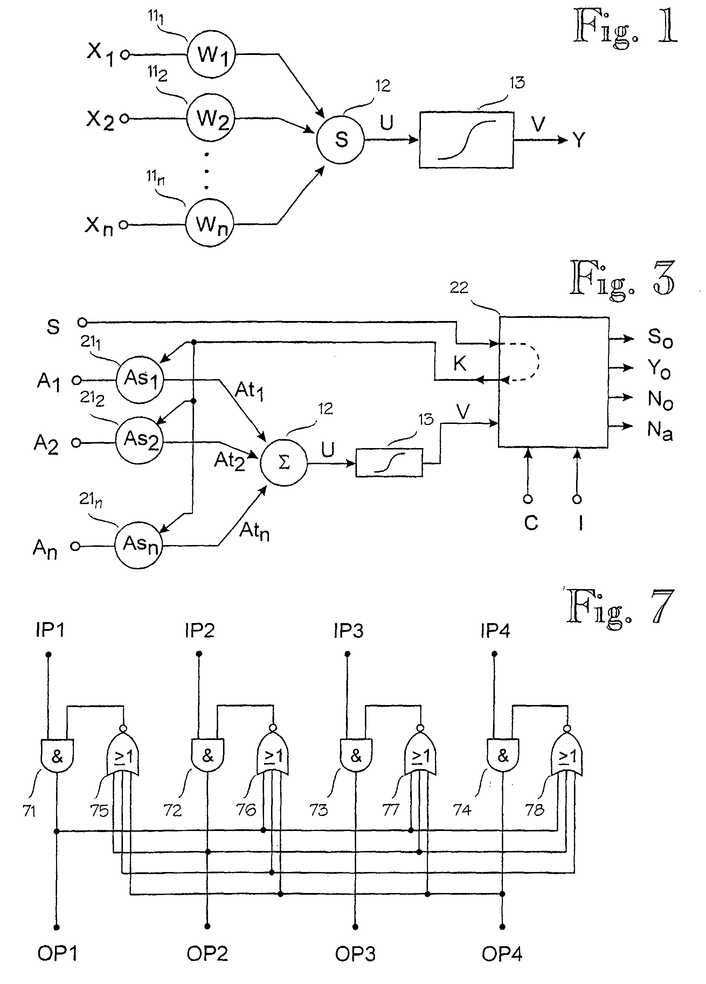

In Fig. 1, signals X₁ to Xₙ are inputs of an artificial neuron and Y is an output signal. The values of the input signals X₁ to Xₙ can be constantly changing (analogous) or binary quantities, and the output signal Y can usually be given both positive and negative values. W₁ to Wₙ are weighting coefficients, i.e. synaptic weights, which can also be either positive or negative. In some cases, only positive signal values and/or weighting coefficients are used. Synapses 11₁ to 11ₙ of the neuron weight the corresponding input signal by the weighting coefficients W₁ to Wₙ. A summing circuit 12 calculates a weighted sum U. The sum U is supplied to a thresholding function circuit 13, whose output signal is V. The threshold function can vary, but usually a sigmoid or a piecewise linear function is used, whereby the output signal is given continuous values. In a conventional neuron, the output signal V of the thresholding function circuit 13 is simultaneously the output signal Y of the whole neuron.

When neurons of this kind are used in artificial neural networks, the network must be trained, i.e. suitable values must be found for the weighting coefficients W₁ to Wₙ. Different algorithms have been developed for the purpose. A neural network that is capable of storing repeatedly supplied information by combining different signals, for example a certain input and a certain situation, is called an associative neural network. In associative neurons, different versions of what is known as the Hebb rule are often used. According to the Hebb rule, the weighting coefficient is increased always when the input corresponding to the weighting coefficient is active and the output of the neuron should be active. The changing of the weighting coefficients according to the algorithms is called the training of the neural network.

From previously known artificial neurons, it is possible to assemble neural networks by connecting neurons in parallel to form layers and by arranging the layers one after the other. Feedback can be implemented in the networks by feeding output signals back as input signals. The network of the invention does not comprise feedback, so the most closely-related corresponding networks are the single-layer perceptron, multi-layer perceptron and radial basis networks. The characteristic feature of these networks is that the operation is based on the adjustment of the weighting coefficients of the inputs by different algorithms.

However, the previously known neural networks are not able to associate a temporally serial signal with another signal.

### BRIEF DESCRIPTION OF INVENTION

The object of the invention is to provide a method and equipment implementing the method in which the above problems of training a neural network can be solved. To put it more precisely, the object of the invention is to provide a mechanism by which the neural network can associate a temporally serial signal with another signal, i.e. concept signal, on the basis of a minimal training period.

The objects of the invention are achieved by the method and equipment which are characterized by what is stated in the independent claims. The preferred embodiments of the invention are claimed in the dependent claims.

The invention is based on associative expansion of the neural network by suitably connected memory means, and on selection of the output signal from only some neurons whose output signal is the most likely to be correct. The aim is usually to achieve unambiguous selection, and so the output signal is selected from at most one neuron at a time.

The invention can be implemented by expanding a conventional neural network that comprises a number of associative neurons each one of which has a number of associative inputs for receiving associative signals and a concept input for receiving a concept input signal. The neural network of the invention also comprises:
memory means, which are arranged to convert the temporally sequential input signals of the neural network to temporally parallel signals, which are operatively connected to the associative inputs of the neurons; and
selection means, which are arranged to select the output signal on the basis of at least one predetermined criterion from only some of the neurons, preferably from at most one neuron at a time.

The temporally sequential input signals of the neural network (both associative inputs and concept inputs) are preferably assembled in signal groups. In the present application, the term 'group' also covers the option that at most one signal at a time is active in each group. This can be implemented either by connecting the neural network with a system where the condition is met automatically, or by supplementing the neural network with selection means that ensure that at most one signal at a time is active in each group.

The advantage of the method or neural network of the invention is that after the training period it is possible to establish which neuron has outputted a signal that best corresponds to the associative signals. The simplest way of doing this is to count the number of the exciting, or active, associative signals that correspond to one (synaptic weighing coefficient) in the neuron. The neuron that has the largest number of such signals is then the one to be excited. When the technology of the present application is used, it is not, in fact, the values of the output signals of the neurons that are calculated but the excitation values. The neuron excited the most strongly is the quickest to supply an output signal, the value of the signal being, for example, exactly one, irrespective of the excitation strength. The strength of the output signal can also depend on the strength of the excitation signal.

The neural network of the invention learns quickly: even a minimum of one example may suffice. Immediately after the training the network will be able to make generalizations: if a certain minimal part of a serial signal corresponds to a signal taught to the network, the network will form, as a response, the concept it has learned. The mechanism according to the invention is flexible and versatile, so that the neural network can be applied as widely as possible. The mechanism is also relatively simple, so the costs of building the neural network remain low.

### BRIEF DESCRIPTION OF DRAWINGS

In the following the invention will be described in greater detail by means of preferred embodiments, with reference to the attached drawings, in which
Fig. 1 shows a general view of an artificial neuron,
Fig. 2 shows a general view of a neural network of the invention,
Figs. 3 to 6 illustrate, by way of example, ways of implementing the details of a single neuron in the neural network,
Fig. 7 shows a way of implementing the selection circuit of the neural network of the invention, and
Fig. 8 shows a way of implementing the memory circuit of the neural network of the invention.

### DETAILED DESCRIPTION OF INVENTION

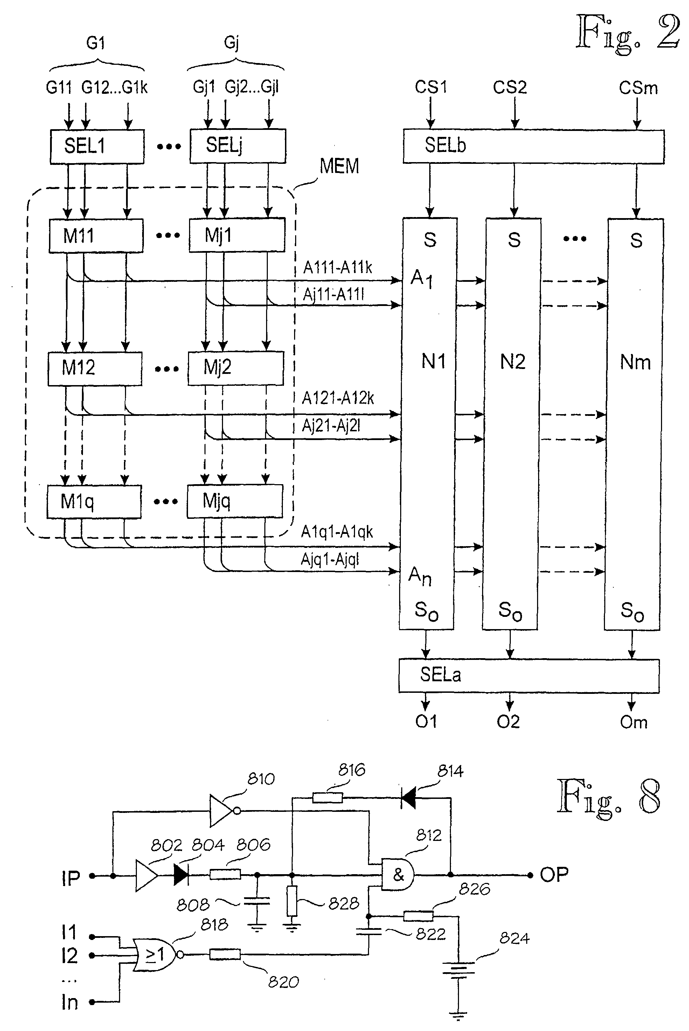

In Fig. 2, the input signals of the neural network of the invention are associating signals (signal groups) G1 to Gj and concept signals CS1 to CSm. Fig. 2 shows an example in which the associating signals have been assembled in j groups, but the concept signals CS1 to CSm form only one group. Other arrangements are also possible. Input signals can be used, for example, in connection with speech recognition such that the serial presentation of speech is supplied to at least one associating signal group G1 to Gj and the recognizable concepts (separate phonemes, commands recognized by the system, etc.) are supplied to the concept inputs CS1 to CSm during the training period. Signals O1 to Om are output signals of the neural network (e.g. phoneme, word or command recognized by the neural network).

The serial (temporally sequential) signal groups G1 to Gj of the neural network are adapted to the inputs of the neurons N1 to Nm of the neural network by memory means MEM. In the embodiment of Fig. 2, the memory means MEM are arranged in j*q matrices M11 to Mjq, where j corresponds to the number of signal groups G1 to Gj and q is determined on the basis of how long back in time the memory MEM is to remember. The temporally parallel output signals A111 to Ajql of the memory circuits M11 to Mjq are connected to the associative inputs of each associative neuron N1 to Nm. The associative inputs of all neurons N1 to Nm can be simply connected in parallel. No hierarchy is needed between the associative inputs of an individual neuron, but the inputs correspond directly to the inputs A₁ to Aₙ of the neuron of Fig. 3. When the neural network is in operation, the temporally parallel signals A111 to Ajql excite associated neural signals in neurons N1 to Nm. The output signal that is excited or activated the quickest is the output signal of the neuron that has been excited with the largest number of associating signals. The selection circuit SELa connected to the output signals of the neurons N1 to Nm then selects on the basis of a criterion (e.g. activation rate or order) the output signal that is the most likely to be correct.

There can be one or more associating input signal groups G1 to Gj. In each signal group G1 to Gj, at most one signal at a time can be active. This can be ensured either by a) using a neural network in an environment where at most one signal at a time is active in each signal group or by b) arranging, between the memory means MEM and the inputs corresponding to each signal group G1 to Gj, selection means or circuits SEL1 to SELj, which select at most one signal in each signal group, for example the one that is the quickest to activate.

In the following we shall study the details of the neural network of the invention more closely. Figs. 3 to 6 relate to the details of a single neuron.

The neuron of Fig. 3 comprises a main signal input S and an arbitrary number of auxiliary signal inputs A₁, A₂, ..., Aₙ. Figs. 3 to 6 show an expanded neuron, which also comprises at least one control, or controlling, input C and at least one inhibiting input I (=Inhibit), and a number of outputs. In the example of Fig. 2 the outputs of the neuron are S_{O}, Y_{O}, N_{O} and Nₐ. The input and output signals can be, for example, voltage levels or binary signals. In its least complicated form the neural network comprises exactly one main signal input S in each neuron.

Blocks 21₁, 21₂, ..., 21ₙ are synapses of the neuron, in which the weighting coefficient corresponding to the auxiliary signal A₁, A₂, ..., Aₙ concerned is stored. In practice, the synapses are, for example, circuit units. Block 12 is a summing circuit, in which the output signals At₁, ..., At₃ of the synapses 21₁, 21₂, ..., 21ₙ are summed. Block 13 is a thresholding circuit, which can be implemented simply as a comparator, which supplies an active output signal only if its input signal level, i.e. the output signal level of the summing circuit 12, exceeds the pre-set threshold value.

Block 22 is called the nucleus of the neuron. Its function is, for example, to key and adjust the main signal S on the basis of the output signal of the thresholding circuit 13 and to form logical operations and/or functions between the signals. Particularly useful logical operations are the logical OR (signal S_{O}) and the logical AND (signal Y_{O}). Other logical operations can also be used in the same way as AND so that the main signal S is inverted first (signal N_{O}) or so that the output signal V of the thresholding circuit 13 is inverted first (signal Nₐ).

In a preferred embodiment of the invention, the nucleus 22 also comprises circuitry that deactivates the output signal S_{O} when a certain period of time has passed from the initiation of the signal, irrespective of what happens in the inputs of the neuron. The circuitry can also take care that a new output pulse cannot be initiated until a certain period of recovery has passed. To the nucleus 22 can also be connected an inhibiting input signal I (Inhibit), which inhibits all outputs when activated (forces them to an inactive state). The control input signal C (Control) controls the learning of the synapses.

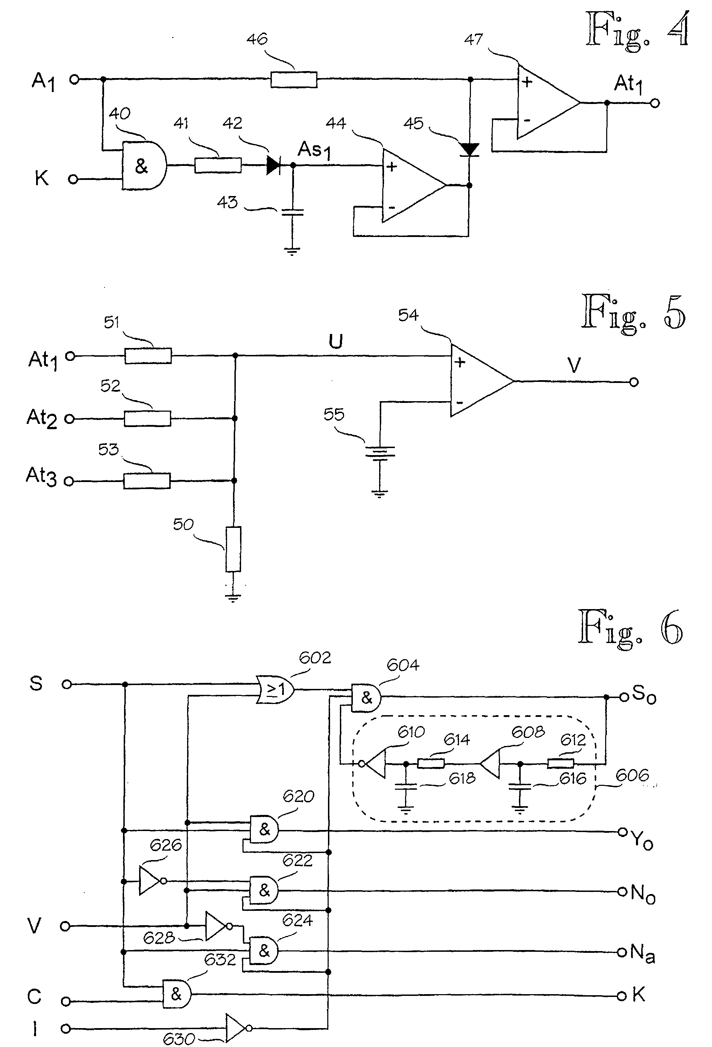

Figs. 4 to 8 show an embodiment in which the input and output signals are voltage signals. The signal is called 'active', if its voltage is positive, and 'inactive', if its voltage is essentially zero.

Fig. 4 shows a way of implementing the synapses 21₁ to 21ₙ of the neuron of Fig. 3. In this solution the voltage corresponding to the weighting coefficient of the synapse is stored through a resistor 41 and a diode 42 in a capacitor 43 always when auxiliary signal A₁ and the main signal S are simultaneously active. (A possible association between the main signal S and the key signal K is described in connection with gate 632 of Fig. 6.) The resistor 41 and the capacitor 43 define a time constant by which the voltage of the capacitor 43 grows. The diode 42 inhibits the voltage from discharging through an AND gate 40. The voltage of the capacitor 43 is supplied to an operational amplifier 44 functioning as a voltage follower, the input impedance of the amplifier being very high (i.e. the discharging of the capacitor 43 caused by it is negligible). The output of the synapse is signal At₁, which is obtained from input signal A₁ by locking it at the voltage level corresponding to the weighting coefficient by a diode 45 and a resistor 46. A second voltage follower 47 buffers the output signal. Always when input signal A₁ is active, output signal At₁ is proportional to the current value of the weighting coefficient.

Fig. 5 shows a way of implementing the summing block 12 of the neuron of Fig. 3. The voltages At₁ to At₃ obtained from synapses 21₁ to 21₃ are summed by a resistor network 50 to 53. (It is readily noticeable that the number of the inputs At₁ to At₃ and that of the resistors 51 to 53 are arbitrary.) The thresholding is performed in a comparator 54, and the thresholding is here abrupt so that the output of the comparator 54 is active only when the summed voltage U in the positive input of the comparator 54 exceeds the threshold value in the negative input (the threshold value in the example of Fig. 5 being the output voltage of a constant voltage power source 55).

Fig. 6 shows a way of implementing the nucleus 22 of the neuron of Fig. 3. An OR circuit 602 generates an output signal S_{O} if the inputted main signal S is active or the thresholded summed voltage V is active. The nucleus 22 contains a block 606 surrounded by a dotted line, the block functioning as a delay circuit. In the example of Fig. 6 the delay circuit 606 comprises a buffer 608 and an inverter 610, resistors 612 to 614 and capacitors 616 to 618. Normally the output of the delay circuit 606 is active, so an AND gate 604 allows an output signal to pass through. When the delay caused by the structure of the components of the delay circuit 606 has passed, the output pulse, inverted, reaches the AND gate 606 and deactivates the output S_{O}. The output S_{O} cannot be re-activated until the delayed output pulse at the output of the delay circuit 606 has ended. A logical AND operation Y_{O} is formed by AND circuit 620, the first element in the operation being the main signal S and the second element being a summed signal V weighted by the weighting coefficients of the auxiliary signals A1 to An and subsequently thresholded. A corresponding AND operation N_{O} is formed by AND circuit 622, with the exception that the inverse value of the main signal S is first formed (i.e. the signal is inverted) by NO circuit 626. The corresponding AND operation Nₐ is formed by AND circuit 624, with the exception that the thresholded summed signal V is first inverted by NO circuit 628. All the outputs can be inhibited by an I signal, which is (here) inverted by NO circuit 630 and then supplied, in the inverted form, to AND circuits 620 to 624. The synapses are controlled by a K signal in accordance with the Hebb rule (cf. Fig. 2). A control signal C is used to define when learning is allowed at all. The generation of the key signal K is inhibited by AND circuit 632 when the control signal C is inactive. Fig. 6 shows an expanded nucleus 22. The most essential part is OR circuit 602, which generates output signal S_{O}, and AND circuit 632, which controls when learning is allowed. The other circuits provide optional additional functions.

Fig. 7 shows a way of implementing selection circuits SELa, SELb and SEL1 to SELj. The circuit operates as follows. When all input signals IP1 to IP4 are zero, the outputs of AND circuits 71 to 74 are zero and the outputs of the NOR (ORNOT) circuits are one. When, for example, input signal IP2 changes to one, the output of the corresponding AND circuit 72 changes to one, and the outputs of the NOR circuits 75, 77 and 78 corresponding to the other inputs change to zero, which forces the other outputs OP1, OP3 and OP4 to change to zero, even though the inputs corresponding to them would change to one.

In the circuit of Fig. 7 it is assumed that a) the circuit should allow at most one signal at a time to pass through, b) the selection criterion is the order in which the input signals of the circuit become active, c) the signals have two states (active and passive), the active state corresponding to a logical one, and d) the number of the signals is 4. The last-mentioned restriction is easy to expand within the scope of the same idea. The circuit of Fig. 7 can be converted so that it allows several signals that become active almost simultaneously to pass through. This can be effected by implementing a certain time window in the circuit, for example by the use of synchronous logic in the circuit, whereby all changes taking place during the same clock pulse are interpreted as being simultaneous. In practice, the arrangement could be implemented, for example, so that if the output signals of several neurons N1 to Nm become active almost simultaneously, a situation arises where the neural network is not able to unambiguously recognize an associating signal (speech, pattern, etc. ). The final selection can here be left to the user or to other reasoning logic (not shown). The normal situation and the situation aimed at, however, are that the neural network itself selects the neuron to be excited the quickest.

Fig. 8 shows a way of implementing one element of the memory circuits M11 to Mjq. In each memory block M11 to Mjq there are as many circuits of Fig. 8 as there are individual signals in the input signal group G1 to Gj concerned (for example, in memory block M11 there are k circuits of Fig. 8). IP stands for input and OP for output. When an active signal (here: a logical one) is supplied to the input IP, the corresponding voltage is stored (through a buffer 802, a diode 804 and a resistor 806) in a capacitor 808. The output OP, however, remains passive (a logical zero), since a NO circuit 810 keeps one input of an AND circuit 812 as zero. When the input signal IP returns to zero, the output of the NO circuit 810 changes to one. This and the voltage stored in the capacitor 808 make the output signal OP change to one. Positive feedback through a diode 814 and a resistor 816 keeps the capacitor 808 charged, so the output OP stays active. The inputs I1, I2, ... are inhibiting inputs and they are connected to the corresponding outputs OP of the parallel memory elements of the same group. If the output of another memory element in the same group changes to one, a NOR circuit 818 sets one input of the AND circuit 812 to zero through a resistor 820 and a capacitor 822. The positive feedback of the AND circuit 812 is interrupted, whereby the capacitor 808 discharges through a resistor 828, and the output OP of the memory element remains permanently at zero, until the above is repeated in the input IP.

It is sometimes preferable to restrict the duration of the output signal of the memory element to a certain maximum value. This can be carried out, for example, by a circuit corresponding to the delay circuit 606 described in connection with Fig. 6. Yet another useful alternative is that groups are formed of the concept signals CS1 to CSm in the same way as described in connection with the associating signals G1 to Gj. When the output signals of one neural network are supplied as input signals to the next neural network, it is naturally useful if the same hierarchy is followed in the outputs of the former neural network as in the inputs of the latter neural network.

In practice, a huge number of neurons (usually 10⁴ to 10⁶) are needed in neural networks. The neuron of the invention can be implemented by a process suitable to large-scale integration, for example by the EEPROM technique, which is used to manufacture the speech storage circuits implemented by semi-conductors. Alternatively, the neurons and the neural network can be simulated by a computer program executed in a digital processor. The values corresponding to the weighting coefficients of the synapses of the neurons are here stored in memory locations (e.g. a matrix variable) and the other parts of the neuron and the neural network are implemented by software logic.

The invention can be applied in areas where information is processed using extensive artificial neural networks. The areas include, for example, processing of audiovisual information, interpretation of sensory information in general and of speech and image in particular, and formation of resistance. The invention is applicable in many modern fields of industry, such as human/machine interfaces, personal electronic assistants and/or means of communication, multimedia, virtual reality, robotics, artificial intelligence and artificial creativity. A possible embodiment is one in which the words and concepts are combined. To inputs G1 to Gj are here supplied signals that correspond to the temporally sequential phonemes of a word. The associating concepts are supplied to inputs CS1 to CSm. After the association, signals that correspond to a certain word and have been supplied to inputs G1 to Gj excite a corresponding concept even when the signal supplied to inputs G1 to Gj is distorted or incomplete. Selection circuit SELa here ensures that the concept which has been excited the most strongly (by the most associations) and is the most likely to be correct is selected.

It will be obvious to a person skilled in the art that with the advancement of technology, the basic idea of the invention can be implemented in many different ways. The invention and its embodiments are thus not limited to the above examples but they can vary within the scope of the claims.

## Claims

1. A method of forming output signals of an associative artificial neural network comprising a number of associative neurons (N1 to Nm), each one of which has a number of parallel associative inputs (A1 to An) for receiving associative signals and a concept input (S) for receiving a concept input signal, the method comprising the steps of:
receiving at least one group (G1 to Gj) of temporally sequential associative input signals (G11 to Gjl),
supplying the signals (G11 to Gjl) of each group to memory means (MEM) to convert them to temporally parallel associating signals (A111 to Ajql), which are operatively supplied to the associating inputs (A1 to An) of the neurons (N1 to Nm),
**characterized by**
ensuring that at most one signal at a time is active in each group (G1 to Gj), and selecting an output signal (O1 to Om) from one neuron (N1 to Nm) at a time on the basis of at least one predetermined criterion.

2. An associative artificial neural network comprising
a number of associative neurons (N1 to Nm), each one of which comprises a number of parallel associative inputs (A1 to An) for receiving associative signals and a concept input (S) for receiving a concept input signal,
memory means (MEM), which are arranged to convert the temporally sequential input signals (G11 to Gjl) of the neural network to temporally parallel signals (A111 to Ajql), which are operatively connected to the associative inputs (A1 to An) of the neurons (N1 to Nm),
**characterized in that** the neural network further comprises
first selection means (SELa), which are arranged to select an output signal (S_{O}) from at most one neurons (N1 to Nm) at a time on the basis of at least one predetermined criterion.

3. A neural network according to claim 2, **characterized in that** the first selection means (SELa) are arranged to select an output signal (S_{O}) on the basis of the order in which the output signals (S_{O}) of the different neurons (N1 to Nm) become active.

4. A neural network according to claim 3, **characterized in that** the first selection means (SELa) are arranged to select the output signal (S_{O}) from the neuron (N1 to Nm) that is the quickest to become active.

5. A neural network according to claim 2, **characterized by** further comprising second selection means (SELb) to ensure that the concept input signal (S_{O}) of at most one neuron (N1 to Nm) at a time is active.

6. A neural network according to claim 2 or 5, **characterized in that** the temporally sequential input signals (G11 to Gjl) are arranged in groups (G1 to Gj).

7. A neural network according to claim 6, **characterized in that** it is connected with a system in which at most one signal at a time (G1 to Gj) is active in each group.

8. A neural network according to claim 6, **characterized by** further comprising third selection means (SEL1 to SELj) to ensure that at most one signal at a time is active in each group (G1 to Gj).

9. A neural network according to claim 6, **characterized in that** the concept input signals (CS1 to CSm) are also arranged in groups.

10. A neural network according to any one of claims 2 to 9, **characterized in that** the memory means (MEM) are arranged in a matrix of blocks (M11 to Mjq) in which
one dimension (j) of the matrix is determined on the basis of the number of the associating input signal groups (G1 to Gj) and the other dimension (q) is determined on the basis of how far back in time the memory means (MEM) are to remember, and
the number of separate memory elements in each block is determined on the basis of the number of signals contained in the group (G1 to Gj) concerned.

11. A neural network according to any one of claims 2 to 10, **characterized by** further comprising means (606) for setting an upper limit to the period when the output signal (O1 to Om) is active.

12. A neural network according to any one of claims 2 to 11, **characterized in that** it is implemented as a microcircuit.

13. A neural network according to any one of claims 2 to 11, **characterized in that** it is implemented by a suitably programmed computer.

## Patentansprüche

1. Verfahren zum Bilden von Ausgangssignalen eines assoziativen künstlichen neuronalen Netzwerks mit mehreren assoziativen Neuronen (N1 bis Nm), von denen jedes eine Anzahl paralleler assoziativer Eingänge (A1 bis An) zum Empfangen assoziativer Signale und einen Konzepteingang (S) zum Empfangen eines Konzept-Eingangssignals aufweist, wobei das Verfahren die Schritte umfasst, bei denen:
zumindest eine Gruppe (G1 bis Gj) zeitlich sequentieller assoziativer Eingangssignale (G11 bis Gjl) empfangen wird,
die Signale (G11 bis Gjl) jeder Gruppe an Speichereinrichtungen (MEM) geliefert werden, um sie in zeitlich parallele assoziierende Signale (A111 bis Ajql) umzuwandeln, die an die assoziierenden Eingänge (A1 bis An) der Neuronen (N1 bis Nm) wirksam geliefert werden,
**gekennzeichnet durch**
Sicherstellen, dass in jeder Gruppe (G1 bis Gj) höchstens ein Signal auf einmal aktiv ist, und
Auswählen eines Ausgangssignals (O1 bis Om) von einem Neuron (N1 bis Nm) auf einmal auf der Basis mindestens eines vorbestimmten Kriteriums.

2. Assoziatives künstliches neuronales Netzwerk, mit
mehreren assoziativen Neuronen (N1 bis Nm), von denen jedes mehrere parallele assoziative Eingänge (A1 bis An) zum Empfangen assoziativer Signale und einen Konzepteingang (S) zum Empfangen eines Konzept-Eingangssignals aufweist,
Speichereinrichtungen (MEM), die angeordnet sind, um die zeitlich sequentiellen Eingangssignale (G11 bis Gjl) des neuronalen Netzwerks in zeitlich parallele Signale (A111 bis Ajql) umzuwandeln, die mit den assoziativen Eingängen (A1 bis An) der Neuronen (N1 bis Nm) wirksam verbunden werden,
**dadurch gekennzeichnet, dass** das neuronale Netzwerk ferner aufweist
erste Auswahleinrichtungen (SELa), die angeordnet sind, um auf der Basis mindestens eines vorbestimmten Kriteriums ein Ausgangssignal (Sₒ) von höchstens einem Neuron (N1 bis Nm) auf einmal auszuwählen.

3. Neuronales Netzwerk nach Anspruch 2, **dadurch gekennzeichnet, dass** die ersten Auswahleinrichtungen (SELa) angeordnet sind, um auf der Basis der Reihenfolge, in der die Ausgangssignale (Sₒ) der verschiedenen Neuronen (N1 bis Nm) aktiv werden, ein Ausgangssignal (Sₒ) auszuwählen.

4. Neuronales Netzwerk nach Anspruch 3, **dadurch gekennzeichnet, dass** die ersten Auswahleinrichtungen (SELa) angeordnet sind, um das Ausgangssignal (Sₒ) von dem Neuron (N1 bis Nm) auszuwählen, das am schnellsten aktiv wird.

5. Neuronales Netzwerk nach Anspruch 2, **dadurch gekennzeichnet, dass** es ferner zweite Auswahleinrichtungen (SELb) aufweist, um sicherzustellen, dass das Konzept-Eingangssignal (Sₒ) von höchstens einem Neuron (N1 bis Nm) auf einmal aktiv ist.

6. Neuronales Netzwerk nach Anspruch 2 oder 5, **dadurch gekennzeichnet, dass** die zeitlich sequentiellen Eingangssignale (G11 bis Gjl) in Gruppen (G1 bis Gj) angeordnet sind.

7. Neuronales Netzwerk nach Anspruch 6, **dadurch gekennzeichnet, dass** es mit einem System verbunden ist, in welchem höchstens ein Signal auf einmal (G1 bis Gj) in jeder Gruppe aktiv ist.

8. Neuronales Netzwerk nach Anspruch 6, **dadurch gekennzeichnet, dass** es ferner dritte Auswahleinrichtungen (SEL1 bis SELj) aufweist, um sicherzustellen, dass höchstens ein Signal auf einmal in jeder Gruppe (G1 bis Gj) aktiv ist.

9. Neuronales Netzwerk nach Anspruch 6, **dadurch gekennzeichnet, dass** die Konzept-Eingangssignale (CS1 bis CSm) ebenfalls in Gruppen angeordnet sind.

10. Neuronales Netzwerk nach einem der Ansprüche 2 bis 9, **dadurch gekennzeichnet, dass** die Speichereinrichtungen (MEM) in einer Matrix von Blöcken (M11 bis Mjq) angeordnet sind, worin
eine Dimension (j) der Matrix auf der Basis der Zahl der assoziierenden Eingangssignalgruppen (G1 bis Gj) bestimmt ist und die andere Dimension (q) auf der Basis davon bestimmt ist, wie weit zurück in der Zeit sich die Speichereinrichtungen (MEM) erinnern sollen, und
die Zahl separater Speicherelemente in jedem Block auf der Basis der Zahl von in der betreffenden Gruppe (G1 bis Gj) enthaltenen Signale bestimmt ist.

11. Neuronales Netzwerk nach einem der Ansprüche 2 bis 10, **dadurch gekennzeichnet, dass** es ferner eine Einrichtung (606) zum Einstellen einer oberen Grenze für die Periode aufweist, wann das Ausgangssignal (O1 bis Om) aktiv ist.

12. Neuronales Netzwerk nach einem der Ansprüche 2 bis 11, **dadurch gekennzeichnet, dass** es als eine Mikroschaltung implementiert ist.

13. Neuronales Netzwerk nach einem der Ansprüche 2 bis 11, **dadurch gekennzeichnet, dass** es durch einen geeignet programmierten Computer implementiert ist.

## Revendications

1. Procédé pour former des signaux de sortie d'un réseau de neurones artificiel associatif comprenant une pluralité de neurones associatifs (N1 à Nm), chacun de ceux-ci ayant une pluralité d'entrées associatives parallèles (A1 à An) pour recevoir des signaux associatifs et une entrée concept (S) pour recevoir un signal d'entrée concept, le procédé comprenant les étapes suivantes :
on reçoit au moins un groupe (G1 à Gj) de signaux d'entrée associatifs séquentiels temporels (G11 à Gjl),
on fournit les signaux (G11 à Gjl) de chaque groupe aux moyens formant mémoire (MEM) pour les convertir en signaux associatifs parallèles temporels (A111 à Ajql), qui sont fournis de manière opérative aux entrées associatives (A1 à An) des neurones (N1 à Nm),
**caractérisé en ce que** :
on s'assure qu'au moins un signal à la fois est actif dans chaque groupe (G1 à Gj), et
on sélectionne un signal de sortie (O1 à Om) depuis un neurone (N1 à Nm) à la fois sur la base d'au moins un critère prédéterminé.

2. Un réseau de neurones artificiels associatifs comprenant
une pluralité de neurones associatifs (N1 à Nm), chacun de ceux-ci comprenant une pluralité d'entrées parallèles associatives (A1 à An) pour recevoir des signaux associatifs et une entrée concept (S) pour recevoir un signal d'entrée concept,
des moyens formant mémoire (MEM), qui sont disposés pour convertir les signaux d'entrée séquentiels temporels (G11 à Gjl) du réseau de neurones en signaux parallèles temporels (A111 à Ajql), qui sont connectés de manière opérative aux entrées associatives (A1 à An) des neurones (N1 à Nm),
**caractérisé en ce que** le réseau de neurones comprend en outre
des premiers moyens de sélection (SELa), qui sont disposés pour sélectionner un signal de sortie (Sₒ) depuis au maximum un neurone (N1 à Nm) à la fois sur la base de au moins un critère prédéterminé.

3. Réseau de neurones selon la revendication 2, **caractérisé en ce que** les premiers moyens de sélection (SELa) sont disposés pour sélectionner un signal de sortie (Sₒ) sur la base de l'ordre dans lequel les signaux de sortie (Sₒ) des différents neurones (N1 à Nm) deviennent actifs.

4. Réseau de neurones selon la revendication 3, **caractérisé en ce que** les premiers moyens de sélection (SELa) sont disposés pour sélectionner le signal de sortie (Sₒ) depuis le neurone (N1 à Nm) qui est le plus rapide pour devenir actif.

5. Réseau de neurones selon la revendication 2, **caractérisé en ce que** il comprend en outre des seconds moyens de sélection (SELb) pour s'assurer que le signal d'entrée concept (Sₒ) d'au moins un neurone (N1 à Nm) à la fois est actif.

6. Réseau de neurones selon la revendication 2 ou 5, **caractérisé en ce que** les signaux d'entrée séquentiels temporels (G11 à Gjl) sont arrangés en groupes (G1 à Gj).

7. Réseau de neurones selon la revendication 6, **caractérisé en ce qu'**il est connecté avec un système dans lequel au moins un signal à la fois (G1 à Gj) est actif dans chaque groupe.

8. Réseau de neurones selon la revendication 6, **caractérisé en ce qu'**il comprend en outre des troisièmes moyens de sélection (SEL1 à SELj) pour s'assurer qu'au moins un signal à la fois est actif dans chaque groupe (G1 à Gj).

9. Réseau de neurones selon la revendication 6, **caractérisé en ce que** les signaux d'entrée concept (CS1 à CSm) sont aussi arrangés en groupes.

10. Réseau de neurones selon l'une quelconque des revendications 2 à 9, **caractérisé en ce que** les moyens formant mémoire (MEM) sont disposés dans une matrice de blocs (M11 à Mjq) dans laquelle
une dimension (j) de la matrice est déterminée sur la base du nombre de groupes de signaux d'entrée associatifs (G1 à Gj) et l'autre dimension (q) est déterminée sur la base de combien de temps en arrière les moyens formant mémoire (MEM) doivent mémoriser, et
le nombre d'éléments de mémoire séparés dans chaque bloc est déterminé sur la base du nombre de signaux contenus dans le groupe (G1 à Gj) concerné.

11. Réseau de neurones selon l'une quelconque des revendications 2 à 10, **caractérisé en ce que** en outre il comprend des moyens (606) pour définir une limite supérieure à la période dans laquelle le signal de sortie (O1 à Om) est actif.

12. Réseau de neurones selon l'une quelconque des revendications 2 à 11, **caractérisé en ce que** il est mis en oeuvre sous forme d'un microcircuit.

13. Réseau de neurones selon l'une quelconque des revendications 2 à 11, **caractérisé en ce que** il est mis en oeuvre par un ordinateur programmé de manière adéquate.
